# EUROPÄISCHE PATENTANMELDUNG

(11) **EP 4 567 489 A1**
(43) Veröffentlichungstag der Anmeldung: **11.06.2025**
(21) Anmeldenummer: 23214014.5
(22) Anmeldetag: 04.12.2023
(51) Int. Cl.: G02B 7/02, F21S 41/29

(54) **LINSENSYSTEM**

(71) Anmelder: ZKW Group GmbH, 3250 Wieselburg (AT)
(72) Erfinder: Mitterlehner, Stefan, 3240 Mank (AT); Amundsson, Lars, 4300 St. Valentin (AT); Hacker, Alexander, 3150 Wilhelmsburg (AT); Hölzl, Andreas, 3250 Wieselburg (AT)
(74) Vertreter: Patentanwaltskanzlei Matschnig & Forsthuber OG

(57) **Zusammenfassung**

Linsensystem (1), welches mit einem Leuchtmittel (2) zusammenwirken kann, umfassend eine Haltevorrichtung (3) mit einem Kontaktbereich (8), einem Anfangsabschnitt (3a), einem Endabschnitt (3c) und einem Halteabschnitt (3b), zum Halten der zumindest eine Linse (4), wobei ein Arretierungselement (5) vorgesehen ist, welches an dem Endabschnitt (3c) der Haltevorrichtung (3) befestigbar ist, wobei das Arretierungselement (5) ein Federelement (6) aufweist, wobei im befestigten Zustand die zumindest eine Linse (4) von dem Kontaktbereich (8) und dem Federelement (6) fixiert wird, oder der Anfangsabschnitt (3a) ein Federelement (6') und das Arretierungselement (5) einen Kontaktbereich (8') aufweist, wobei im befestigten Zustand die zumindest eine Linse (4) von dem Kontaktbereich (8') und dem Federelement (6') fixiert wird.

## Beschreibung

### Technisches Gebiet

Die Erfindung betrifft ein Linsensystem, welches dazu eingerichtet ist, mit einem Leuchtmittel zusammenzuwirken (oder einem Leuchtmittel zugeordnet zu sein), wobei in einem Assemblierungszustand, in welchem das Linsensystem mit einem Leuchtmittel, insbesondere optisch, zusammenwirkt (oder einem Leuchtmittel zugeordnet ist), das Linsensystem mit dem Leuchtmittel eine Komponente einer Fahrzeugleuchte oder eine Fahrzeugleuchte, insbesondere eine Kraftfahrzeugleuchte, ausbildet, wobei im Assemblierungszustand das Linsensystem dazu eingerichtet sind, Licht, welches von dem Leuchtmittel erzeugbar und entlang einer Hauptabstrahlrichtung abstrahlbar ist, optisch zu beeinflussen, wobei das Linsensystem
eine Haltevorrichtung umfasst, welche im Assemblierungszustand in Hauptabstrahlrichtung nach dem Leuchtmittel angeordnet ist und in welcher zumindest eine Linse, vorzugsweise zwei, drei oder mehr Linsen, aufgenommen ist, wobei die zumindest eine Linse dazu eingerichtet ist, in Zusammenwirken mit dem Leuchtmittel eine Lichtfunktion auszubilden, wobei die Haltvorrichtung einen Halteabschnitt aufweist, welcher dazu eingerichtet ist, die zumindest eine Linse derart zu halten, dass
   im Assemblierungszustand eine Lichteintrittsfläche der zumindest einen Linse dem Leuchtmittel zugewandt ist und eine Lichtaustrittsfläche der zumindest einen Linse dem Leuchtmittel abgewandt ist, sodass Licht des Leuchtmittels über die Lichteintrittsfläche in die zumindest eine Linse eintreten, durch die zumindest eine Linse durchtreten, und über die Lichtaustrittsfläche aus der zumindest einen Linse austreten kann,
   eine optische Achse der zumindest einen Linse parallel, bevorzugt koaxial, zur Hauptabstrahlrichtung orientiert ist, und
   die zumindest eine Linse in einer Ebene, welche orthogonal auf die optische Achse der zumindest einen Linse orientiert ist, fixiert ist,
wobei die Haltevorrichtung einen dem Leuchtmittel zugewandten Anfangsabschnitt und einen dem Leuchtmittel abgewandten Endabschnitt aufweist, wobei sich der Halteabschnitt von dem Anfangsabschnitt zu dem Endabschnitt entlang einer Längsachse der Haltevorrichtung erstreckt.

Die Erfindung betrifft weiters einen Kraftfahrzeugscheinwerfer, umfassend ein Linsensystem.

Die Erfindung betrifft ferner ein Verfahren zur Assemblierung eines Linsensystems für einen Kraftfahrzeugscheinwerfer.

### Technischer Hintergrund

Im Stand der Technik sind gattungsgemäße Linsensysteme für Kraftfahrzeugscheinwerfer bekannt. Durch die Verwendung unterschiedlicher Materialien bei Linsen, optionalen Abstandselementen zwischen den Linsen (wie beispielsweise Distanzscheiben) und einer Haltevorrichtung (etwa ein Haltezylinder wie z.B. ein Objektiv), in welcher die Linsen und die Abstandselemente aufgenommen sind, kann es bei steigenden Temperaturen (durch eine Lichtquelle) vorkommen, dass die Linsen in der Haltevorrichtung locker werden und die optische Qualität der mit den Linsen erzeugten Lichtfunktionen variiert. Bei einer bekannten Lösung dieses Problems kommt ein sogenannter Gewindering zur Befestigung der Linsen in der Haltevorrichtung zum Einsatz. Dieser ist jedoch in seiner Herstellung aufwendig und kostenintensiv. Weiters ist der Montageprozess fehleranfällig und schwierig zu automatisieren.

Die Aufgabe der vorliegenden Erfindung besteht darin, die Nachteile des Standes der Technik zu lindern bzw. zu beseitigen. Die Erfindung setzt sich daher insbesondere zum Ziel, ein Linsensystem zu schaffen, bei welchem eine Linse bzw. mehrere Linsen bei erhöhten Temperaturen zuverlässig und sicher befestigt sind, und dessen Montageprozess einfach und vollautomatisierbar ist.

Diese Aufgabe wird durch ein Linsensystem mit den Merkmalen von Anspruch 1 und ein Verfahren mit den Merkmalen von Anspruch 14 gelöst. Bevorzugte Ausführungen sind in den abhängigen Ansprüchen angegeben.

### Kurzdarstellung der Erfindung

Erfindungsgemäß weist der Halteabschnitt einen Kontaktbereich auf, welcher dazu eingerichtet ist, eine, insbesondere koaxiale lineare, Bewegung der zumindest einen Linse entgegen der Hauptabstrahlrichtung über den Anfangsabschnitt der Haltevorrichtung hinaus zu blockieren,
wobei das Linsensystem ein Arretierungselement aufweist, welches an dem Endabschnitt der Haltevorrichtung befestigbar ist, wobei das Arretierungselement ein Eingriffselement und der Endabschnitt ein zu dem Eingriffselement komplementär ausgestaltetes Eingriffsgegenelement aufweist, wobei durch einen Eingriff des Eingriffselements mit dem Eingriffsgegenelement das Arretierungselement an dem Endabschnitt, vorzugsweise lösbar, befestigt ist, wobei das Arretierungselement dazu eingerichtet ist, im befestigten Zustand des Arretierungselements an dem Endabschnitt eine Bewegung der zumindest einen Linse entlang der Hauptabstrahlrichtung über den Endabschnitt der Haltevorrichtung hinaus zu blockieren,
wobei das Arretierungselement ein Federelement aufweist, welches dazu eingerichtet ist, im befestigten Zustand des Arretierungselements an dem Endabschnitt an der zumindest einen Linse, insbesondere an einem Abschnitt der Lichtaustrittsfläche der zumindest einen Linse, anzugreifen und eine Federkraft auf die zumindest eine Linse auszuüben, wobei das Federelement derart ausgestaltet ist, dass die Federkraft entgegensetzt zur Hauptabstrahlrichtung derart wirkt, dass durch die Federkraft eine dem Federelement abgewandte Seite der zumindest einen Linse gegen den Kontaktbereich gedrückt und in einer Position entlang der Hauptabstrahlrichtung fixiert wird.

Alternativ dazu ist erfindungsgemäß vorgesehen, dass das Linsensystem ein Arretierungselement aufweist, welches an dem Endabschnitt der Haltevorrichtung befestigbar ist, wobei das Arretierungselement ein Eingriffselement und der Endabschnitt ein zu dem Eingriffselement komplementär ausgestaltetes Eingriffsgegenelement aufweist, wobei durch einen Eingriff des Eingriffselements mit dem Eingriffsgegenelement das Arretierungselement an dem Endabschnitt, vorzugsweise lösbar, befestigt ist, wobei das Arretierungselement einen Kontaktbereich aufweist, welcher dazu eingerichtet ist, eine, insbesondere koaxiale lineare, Bewegung der zumindest einen Linse entlang der Hauptabstrahlrichtung über den Endabschnitt der Haltevorrichtung hinaus zu blockieren, wobei der Anfangsabschnitt der Haltevorrichtung ein Federelement aufweist, welches dazu eingerichtet ist, im befestigten Zustand des Arretierungselements an dem Endabschnitt an der zumindest einen Linse, insbesondere an einem Abschnitt der Lichteintrittsfläche der zumindest einen Linse, anzugreifen und eine Federkraft auf die zumindest eine Linse auszuüben, wobei das Federelement derart ausgestaltet ist, dass die Federkraft entlang zur Hauptabstrahlrichtung derart wirkt, dass durch die Federkraft eine dem Federelement abgewandte Seite der zumindest einen Linse gegen den Kontaktbereich gedrückt und in einer Position entlang der Hauptabstrahlrichtung fixiert wird.

Dadurch ergibt sich der Vorteil, dass die zumindest eine Linse zwischen dem Kontaktbereich und dem Federelement sicher und zuverlässig gehalten wird, wobei zusätzlich zur sicheren Halterung eine Wärmeausdehnung der Linse, welche durch das eingeschaltete und damit wärmeabgebende Leuchtmittel hervorgerufen wird, durch die Federkraft des Federelements kompensiert wird. Durch die Federkraft kann sich die Linse somit innerhalb der Haltevorrichtung nicht lockern, auch wenn diese eine Wärmeausdehnung erfährt. Damit kann mit dem Linsensystem eine Lichtfunktion, beispielsweise eine dynamische Bodenprojektion, zuverlässig erzeugt werden. Vorzugsweise ist das Linsensystem Teil eines Projektionssystems (z.B. einer Abbildungsoptik) einer Beleuchtungsvorrichtung eines Kraftfahrzeugscheinwerfers.

Es kann vorgesehen sein, dass das Federelement zumindest zwei, drei, vier oder mehr Federarme aufweist, welche sich im befestigten Zustand radial, hin zur Längsachse der Haltevorrichtung erstrecken, wobei die Federarme derart an dem Arretierungselement oder dem Anfangsabschnitt angeordnet sind, dass, an der zumindest einen Linse angreifende, Angriffsflächen der Federarme an der zumindest einen Linse umfangseitig entlang eines Linsenumfangs der zumindest einen Linse gleichmäßig bzw. äquidistant verteilt sind. Vorzugsweise weisen die Federarme jeweils eine Längserstreckung auf, welche sich in einer Ebene erstreckt, die orthogonal zur optischen Achse der zumindest einen Linse orientiert ist. Die Federarme sind bevorzugt gleichartig bzw. baugleich bzw. formgleich ausgestaltet. Insbesondere sind die Federarme an dem Anfangsabschnitt der Haltevorrichtung oder an dem Arretierungselement derart angeordnet, dass die Federarme in derselben Ebene liegen.

Es kann vorgesehen sein, dass die Haltevorrichtung als Hohlkörper ausgestaltet ist, welcher eine Längserstreckung, welche parallel zur Längsachse und parallel zur Lichtabstrahlrichtung verläuft, aufweist, wobei an einer Innenseite einer den Hohlkörper begrenzenden Mantelfläche der Halteabschnitt ausgebildet ist.

Es kann vorgesehen sein, dass die Haltevorrichtung, und vorzugsweise das Arretierungselement, als zylinderförmiger Hohlkörper ausgestaltet ist, welcher von einer Zylindermantelfläche begrenzt ist, wobei der Halteabschnitt an einer Innenfläche der Zylindermantelfläche ausgebildet ist, sodass die zumindest eine Linse von dem zylinderförmigen Hohlkörper umfangseitig ummantelt ist.

Es kann vorgesehen sein, dass das Federelement zumindest zwei, drei, vier oder mehr Federarme aufweist, welche jeweils eine kreissegmentförmige Längserstreckung aufweisen, wobei die zumindest zwei Federarme derart ausgestaltet sind, dass deren Längserstreckung einem Abschnitt eines virtuellen Kreises folgt, dessen Radius gleich oder kleiner dem Umfang der Zylindermantelfläche ist.

Es kann vorgesehen sein, dass das Linsensystem zumindest zwei, drei oder mehr Linsen aufweist, welche an dem Halteabschnitt koaxial, entlang der Hauptabstrahlrichtung hintereinander angeordnet sind, wobei vorzugsweise zwischen zumindest zwei benachbarten Linsen, bevorzugt zwischen allen aufeinanderfolgenden Linsen, Abstandselemente angeordnet sind, welche zwei benachbarte Linsen entlang der Hauptabstrahlrichtung in einem vorgegebenen Abstand zueinander halten. Vorzugsweise ist zumindest ein Abstandselement, vorzugsweise alle zwischen den Linsen angeordneten Abstandselemente, als Strahlenblende ausgestaltet, welche insbesondere dazu eingerichtet ist, Streulicht, welches an den Linsenrändern entsteht, zu blockieren, damit dieses innerhalb der Haltevorrichtung absorbiert wird.

Es kann vorgesehen sein, dass eine proximale Linse dem Leuchtmittel am nächsten ist und eine distale Linse dem Leuchtmittel am entferntesten ist, wobei an der Lichtaustrittsfläche der distalen Linse das Federelement angreift und die Lichteintrittsfläche der proximalen Linse den Kontaktbereich des Halteabschnitts kontaktiert, oder an der Lichteintrittsfläche der proximalen Linse das Federelement angreift und die Lichtaustrittsfläche der distalen Linse den Kontaktbereich des Arretierungselements kontaktiert.

Es kann vorgesehen sein, dass die zumindest zwei, drei oder mehr Linsen jeweils gleiche oder unterschiedliche Linsenformen aufweisen, beispielsweise eine bi-konvexe, bi-konkave, konkav-konvex oder konvex-konkave Linsenform. Weitere Linsenformen können sphärische, asphärische, planare Linsenflächen oder Freiformflächen umfassen.

Es kann vorgesehen sein, dass die Haltevorrichtung mit der zumindest einen Linse als Objektivtubus ausgestaltet ist.

Es kann vorgesehen sein, dass das Eingriffselement und das Eingriffsgegenelement eine Klebeverbindung, eine Rastverbindung, einen Bajonettverschluss oder eine Klemmverbindung ausbilden.

Es kann vorgesehen sein, dass der Halteabschnitt, vorzugsweise die Haltevorrichtung, für Licht des Leuchtmittels intransparent ausgestaltet ist.

Es kann vorgesehen sein, dass der Kontaktbereich der Haltevorrichtung und/oder der Kontaktbereich des Arretierungselements als Kontaktfläche, beispielsweise als Vorsprung, ausgestaltet ist, welche sich von einer der zumindest einen Linse zugewandten Innenfläche des Arretierungselements oder der Haltevorrichtung in Richtung Längsachse erstreckt.

Es kann eine Fahrzeugleuchte, insbesondere Kraftfahrzeugleuchte, vorgesehen sein, umfassend ein Linsensystem und ein Leuchtmittel, welches mit dem Linsensystem zusammenwirkt und mit dem Linsensystem einen Assemblierungszustand ausbildet, wobei die Fahrzeugleuchte insbesondere ein Kraftfahrzeugscheinwerfer, eine Bodenprojektionsvorrichtung oder ein Digital-Light-Processing-Lichtmodul ist.

Gemäß einem weiteren Aspekt der Erfindung ist ein Verfahren zur Assemblierung eines Linsensystems für eine Fahrzeugleuchte, insbesondere für einen Kraftfahrzeugscheinwerfer, vorgesehen, wobei das Verfahren die folgenden Schritte aufweist:
- Bereitstellen eines Leuchtmittels zur Erzeugung und Abstrahlung von Licht entlang einer Hauptabstrahlrichtung,
- Bereitstellen einer Haltevorrichtung, welche in Hauptabstrahlrichtung nach dem Leuchtmittel angeordnet ist,
- Aufnehmen von zumindest einer Linse, vorzugsweise zwei, drei oder mehr Linsen, in die Haltevorrichtung, wobei die zumindest eine Linse im aufgenommenen Zustand dazu eingerichtet ist, in Zusammenwirken mit dem Leuchtmittel eine Lichtfunktion auszubilden, wobei die Haltvorrichtung einen Halteabschnitt aufweist, welcher dazu eingerichtet ist, die zumindest eine Linse derart zu halten, dass
   eine Lichteintrittsfläche der zumindest einen Linse dem Leuchtmittel zugewandt ist und eine Lichtaustrittsfläche der zumindest einen Linse dem Leuchtmittel abgewandt ist, sodass Licht des Leuchtmittels über die Lichteintrittsfläche in die zumindest eine Linse eintreten, durch die zumindest eine Linse durchtreten, und über die Lichtaustrittsfläche aus der zumindest einen Linse austreten kann,
   eine optische Achse der zumindest einen Linse parallel, bevorzugt koaxial, zur Hauptabstrahlrichtung orientiert ist, und
   die zumindest eine Linse in einer Ebene, welche orthogonal auf die optische Achse der zumindest einen Linse orientiert ist, fixiert ist,
wobei die Haltevorrichtung einen dem Leuchtmittel zugewandten Anfangsabschnitt und einen dem Leuchtmittel abgewandten Endabschnitt aufweist, wobei sich der Halteabschnitt von dem Anfangsabschnitt zu dem Endabschnitt entlang einer Längsachse der Haltevorrichtung erstreckt.

Das Verfahren umfasst die folgenden erfindungsgemäßen Schritte:
- Bereitstellen eines Arretierungselements, welches an dem Endabschnitt der Haltevorrichtung befestigbar ist, wobei das Arretierungselement ein Eingriffselement und der Endabschnitt ein zu dem Eingriffselement komplementär ausgestaltetes Eingriffsgegenelement aufweist, wobei durch einen Eingriff des Eingriffselements mit dem Eingriffsgegenelement das Arretierungselement an dem Endabschnitt, vorzugsweise lösbar, befestigt ist, wobei das Arretierungselement dazu eingerichtet ist, im befestigten Zustand eine Bewegung der zumindest einen Linse entlang der Hauptabstrahlrichtung über den Endabschnitt hinaus zu blockieren,
   wobei der Halteabschnitt einen Kontaktbereich aufweist, welcher dazu eingerichtet ist, eine, insbesondere koaxiale lineare, Bewegung der zumindest einen Linse entgegen der Hauptabstrahlrichtung über den Anfangsabschnitt zu blockieren,
- Befestigen des Arretierungselements an dem Endabschnitt, wobei das Arretierungselement ein Federelement aufweist, welches dazu eingerichtet ist, im befestigten Zustand des Arretierungselements, an der zumindest einen Linse, insbesondere an einem Abschnitt der Lichtaustrittsfläche der zumindest einen Linse, anzugreifen und eine Federkraft auf die zumindest eine Linse auszuüben, wobei das Federelement derart ausgestaltet ist, dass die Federkraft entgegensetzt zur Hauptabstrahlrichtung wirkt und durch die Federkraft eine dem Federelement abgewandte Seite der zumindest einen Linse gegen den Kontaktbereich gedrückt und in einer Position entlang der Hauptabstrahlrichtung fixiert wird.

Alternativ dazu, umfasst das Verfahren die folgenden erfindungsgemäßen Schritte:
- Bereitstellen eines Arretierungselements, welches an dem Endabschnitt der Haltevorrichtung befestigbar ist, wobei das Arretierungselement ein Eingriffselement und der Endabschnitt ein zu dem Eingriffselement komplementär ausgestaltetes Eingriffsgegenelement aufweist, wobei durch einen Eingriff des Eingriffselements mit dem Eingriffsgegenelement das Arretierungselement an dem Endabschnitt, vorzugsweise lösbar, befestigt ist,
   wobei das Arretierungselement einen Kontaktbereich aufweist, welcher dazu eingerichtet ist, eine, insbesondere koaxiale lineare, Bewegung der zumindest einen Linse entlang der Hauptabstrahlrichtung über den Endabschnitt hinaus zu blockieren,
- Befestigen des Arretierungselements an dem Endabschnitt, wobei der Anfangsabschnitt ein Federelement aufweist, welches dazu eingerichtet ist, im befestigten Zustand des Arretierungselements an dem Endabschnitt an der zumindest einen Linse, insbesondere an einem Abschnitt der Lichteintrittsfläche der zumindest einen Linse, anzugreifen und eine Federkraft auf die zumindest eine Linse auszuüben, wobei das Federelement derart ausgestaltet ist, dass die Federkraft entlang der Hauptabstrahlrichtung derart wirkt, dass durch die Federkraft eine dem Federelement abgewandte Seite der zumindest einen Linse gegen den Kontaktbereich gedrückt und in einer Position entlang der Hauptabstrahlrichtung fixiert wird.

### Kurzbeschreibung der Figuren

Nachfolgend wird die Erfindung anhand von beispielhaften Zeichnungen näher erläutert. Hierbei zeigt
Fig. 1a eine Schnittansicht eines Linsensystems gemäß einem ersten Ausführungsbeispiel,
Fig. 1b ein Arretierungselement des Linsensystems gemäß Fig. 1a,
Fig. 2a eine Schnittansicht eines Linsensystems gemäß einem zweiten Ausführungsbeispiel,
Fig. 2b ein Arretierungselement des Linsensystems gemäß Fig. 2a,
Fig. 3 eine perspektivische Ansicht einer Haltevorrichtung,
Fig. 4 eine Schnittansicht einer Haltevorrichtung mit drei Linsen, und
Fig. 5a bis 5d verschiedene Befestigungsvarianten eines Arretierungselements an einer Haltevorrichtung.

### Eingehende Beschreibung der Ausführungsformen

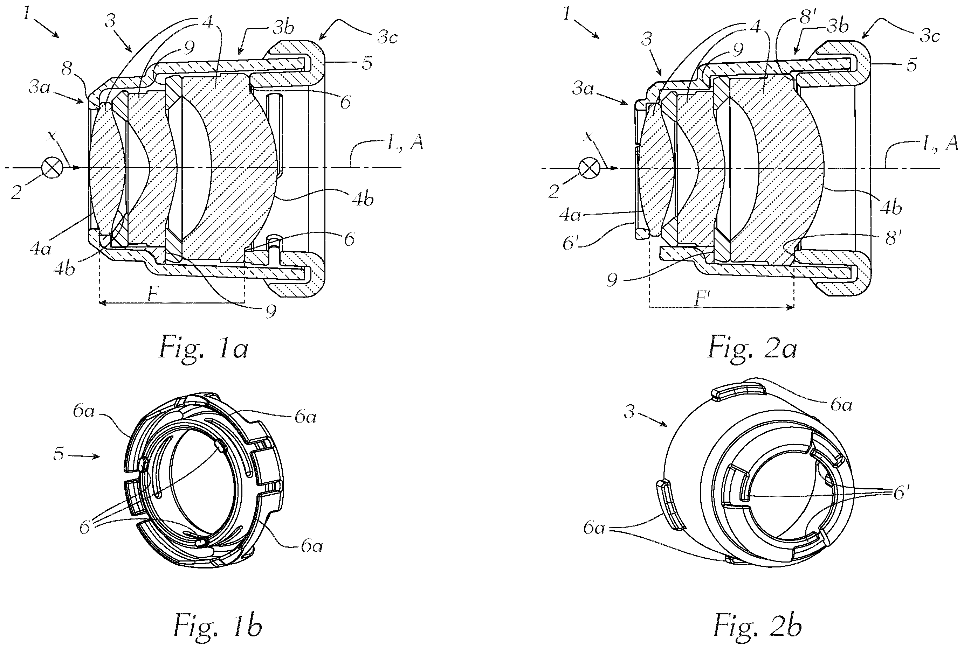

**Fig. 1a** zeigt ein erstes Ausführungsbeispiel eines Linsensystems 1 für eine Fahrzeugleuchte, insbesondere für eine Kraftfahrzeugleuchte oder einen Kraftfahrzeugscheinwerfer. Das Linsensystem 1 ist dazu eingerichtet, mit einem Leuchtmittel 2 zusammenzuwirken und dabei, mit dem Leuchtmittel 2, einen Assemblierungszustand auszubilden. Im Assemblierungszustand wirkt das Linsensystem 1 mit dem Leuchtmittel 2, insbesondere optisch, zusammen. Im Assemblierungszustand bildet das Linsensystem 1 mit dem Leuchtmittel 2 eine Komponente einer Fahrzeugleuchte oder eine Fahrzeugleuchte, insbesondere eine Kraftfahrzeugleuchte, aus. Weiters ist im Assemblierungszustand das Linsensystem 1 dazu eingerichtet sind, Licht, welches von dem Leuchtmittel 2 erzeugbar ist (oder erzeugt wird) und entlang einer Hauptabstrahlrichtung x abstrahlbar ist (oder abgestrahlt wird), optisch zu beeinflussen. Insbesondere kann im Assemblierungszustand Licht des Leuchtmittels 2 auf eine oder mehrere Linsen des Linsensystems 1 treffen und durch diese optisch beeinflusst werden. In einem Fertigungszustand ist dem Linsensystem 1 kein Leuchtmittel 2 zugeordnet bzw. wirkt im Fertigungszustand kein Leuchtmittel 2 mit dem Linsensystem 1 zusammen. Beim Übergang vom Fertigungszustand zum Assemblierungszustand wird dem Linsensystem 1 ein Leuchtmittel 2 zugeordnet, damit das Linsensystem 1 mit dem Leuchtmittel 2 (bzw. mit dem Licht des Leuchtmittels 2) zusammenwirken kann.

Im Assemblierungszustand (der in den Fig. 1a und 2a gezeigt ist) ist das Leuchtmittel 2 zur Erzeugung und Abstrahlung von Licht entlang einer Hauptabstrahlrichtung x eingerichtet. Eine Haltevorrichtung 3 des Linsensystems 1 ist, im Assemblierungszustand, in Hauptabstrahlrichtung x nach dem Leuchtmittel 2 angeordnet und in der Haltevorrichtung 3 sind, in dem gezeigten Beispiel, drei Linsen 4 aufgenommen. Es kann jede beliebige Anzahl an Linsen in der Haltevorrichtung 3 aufgenommen sein, die Anzahl an Linsen ergibt sich im Wesentlichen durch die gewünschte Lichtfunktion, welche mit dem Linsensystem 1 erzeugt werden soll. Die Linsen 4 sind dazu eingerichtet, in Zusammenwirken mit dem Leuchtmittel 2 eine bestimmte Lichtfunktion auszubilden.

Die Haltvorrichtung 3 umfasst einen Halteabschnitt 3b, welcher dazu eingerichtet ist, die Linsen 4 derart zu halten, dass Lichteintrittsflächen 4a der Linsen 4 dem Leuchtmittel 2 zugewandt sind und Lichtaustrittsflächen 4b der Linsen 4 dem Leuchtmittel 2 abgewandt sind, sodass Licht des Leuchtmittels 2 über die Lichteintrittsflächen 4a in die jeweilige Linse eintreten, durch die Linse 4 durchtreten, und über die Lichtaustrittsfläche 4b aus der Linse 4 austreten kann.

Der Halteabschnitt 3b ist weiters dazu eingerichtet, die Linsen 4 derart zu halten, dass optische Achsen A der Linsen 4 parallel, bevorzugt koaxial, zur Hauptabstrahlrichtung x orientiert sind.

Der Halteabschnitt 3b ist überdies dazu eingerichtet, die Linsen 4 derart zu halten, dass die Linsen 4 in parallelen Ebenen, welche jeweils orthogonal auf deren optische Achsen A orientiert sind, fixiert sind.

Die Haltevorrichtung 3 hat einen dem Leuchtmittel 2 zugewandten Anfangsabschnitt 3a und einen dem Leuchtmittel 2 abgewandten Endabschnitt 3c. Weiters erstreckt sich der Halteabschnitt 3b von dem Anfangsabschnitt 3a zu dem Endabschnitt 3c entlang einer Längsachse L der Haltevorrichtung 3. Der Halteabschnitt 3b (oder der Anfangsabschnitt 3a) weist einen Kontaktbereich 8 auf, welcher dazu eingerichtet ist, eine, insbesondere koaxiale lineare, Bewegung der Linsen 4 entgegen der Hauptabstrahlrichtung x über den Anfangsabschnitt 3a der Haltevorrichtung 3 hinaus zu blockieren.

Die drei Linsen 4 umfassen eine proximale Linse 4 (in Fig. 1a und Fig. 1b jeweils die linke Linse), die dem Leuchtmittel 2 am nächsten ist und eine distale Linse 4 (in Fig. 1a und Fig. 1b jeweils die rechte Linse), die dem Leuchtmittel 2 am entferntesten ist. Zwischen der proximalen Linse und der distalen Linse ist eine weitere Linse 4 (in Fig. 1a und Fig. 1b jeweils die mittlere) angeordnet.

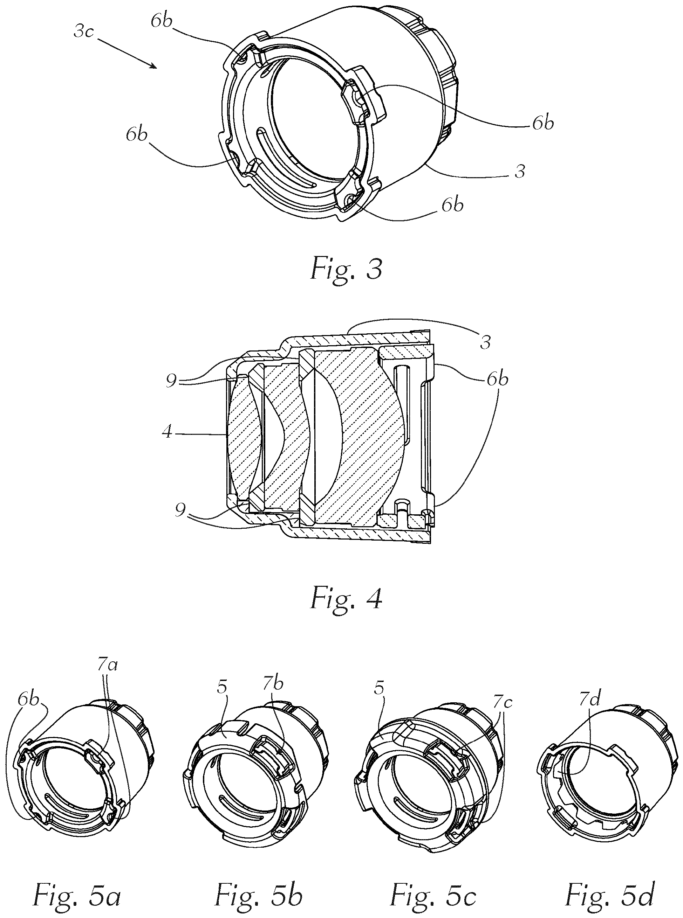

Gemäß dem Ausführungsbeispiel der **Fig. 1a** und **Fig. 1b** weist das Linsensystem 1 ein Arretierungselement 5 auf, welches an dem Endabschnitt 3c der Haltevorrichtung 3 befestigbar ist. Das Arretierungselement 5 hat ein Eingriffselement 6a und der Endabschnitt 3c hat ein zu dem Eingriffselement 6a komplementär ausgestaltetes Eingriffsgegenelement 6b (Fig. 3, 4). Durch einen Eingriff des Eingriffselements 6a mit dem Eingriffsgegenelement 6b wird das Arretierungselement 5 an dem Endabschnitt 3c, vorzugsweise lösbar, befestigt.

Das Arretierungselement 5 ist dazu eingerichtet, im befestigten Zustand des Arretierungselements 5 an dem Endabschnitt 3c eine Bewegung der zumindest einen Linse 4 entlang der Hauptabstrahlrichtung x über den Endabschnitt 3c der Haltevorrichtung 3 hinaus zu blockieren.

Ferner weist das Arretierungselement 5 ein Federelement 6 auf (vgl. Fig 1b), welches dazu eingerichtet ist, im befestigten Zustand (vgl. Fig. 1a) des Arretierungselements 5 an dem Endabschnitt 3c an der distalen Linse 4, insbesondere an einem Abschnitt der Lichtaustrittsfläche 4b der distalen Linse 4, anzugreifen und eine Federkraft F auf die distale Linse 4 auszuüben. Das Federelement 6 ist derart ausgestaltet, dass die Federkraft F entgegensetzt zur Hauptabstrahlrichtung x derart wirkt, dass durch die Federkraft F eine dem Federelement 6 abgewandte Seite der distalen Linse 4 gegen den Kontaktbereich 8 gedrückt und in einer Position entlang der Hauptabstrahlrichtung x fixiert wird.

Im Fall, dass das Linsensystem eine einzige Linse aufweist, wird die Linse zwischen dem Federelement 6 des Arretierungselements 5 und einem Kontaktbereich 8, welcher an dem Halteabschnitt 3b oder dem Anfangsabschnitt 3a ausgebildet ist, gehalten.

**Fig. 2a** und **Fig. 2b** zeigen eine zweite Ausführungsform des Linsensystems 1. Auch in diesem Beispiel ist ein Arretierungselement 5 an dem Endabschnitt 3c der Haltevorrichtung 3 befestigbar. Das Arretierungselement 5 hat ebenfalls ein Eingriffselement 6a und der Endabschnitt 3c hat ein zu dem Eingriffselement 6a komplementär ausgestaltetes Eingriffsgegenelement 6b (Fig. 3, 4). Durch einen Eingriff des Eingriffselements 6a mit dem Eingriffsgegenelement 6b kann das Arretierungselement 5 an dem Endabschnitt 3c, vorzugsweise lösbar, befestigt werden.

Im Unterschied zu dem Ausführungsbeispiel gemäß den Fig. 1a und 1b, weist das Arretierungselement 5 einen Kontaktbereich 8' auf, welcher dazu eingerichtet ist, eine, insbesondere koaxiale lineare, Bewegung der distalen Linse 4 entlang der Hauptabstrahlrichtung x über den Endabschnitt 3c der Haltevorrichtung 3 hinaus zu blockieren.

Der Anfangsabschnitt 3a der Haltevorrichtung 3 umfasst in dieser Ausführungsform ein Federelement 6', welches dazu eingerichtet ist, im befestigten Zustand des Arretierungselements 5 an dem Endabschnitt 3c an der proximalen Linse 4, insbesondere an einem Abschnitt der Lichteintrittsfläche 4a der proximalen Linse 4, anzugreifen und eine Federkraft F' auf die proximale Linse 4 auszuüben. Das Federelement 6' ist derart ausgestaltet, dass die Federkraft F' entlang zur Hauptabstrahlrichtung x derart wirkt, dass durch die Federkraft F' eine dem Federelement 6' abgewandte Seite der proximalen Linse 4 gegen den Kontaktbereich 8' gedrückt und in einer Position entlang der Hauptabstrahlrichtung x fixiert wird.

Wie in **Fig. 3** und **Fig. 4** gezeigt, ist in den Ausführungsbeispielen der Fig. 1a und 2a die Haltevorrichtung 3 als Hohlkörper ausgestaltet, welcher eine Längserstreckung aufweist, welche parallel zur Längsachse L und parallel zur Lichtabstrahlrichtung x verläuft. Die Längsachse L und die Lichtabstrahlrichtung x sind weiters parallel zu den optischen Achsen A der Linsen 4. An einer Innenseite einer den Hohlkörper begrenzenden Mantelfläche ist der Halteabschnitt 3b ausgebildet. Die Haltevorrichtung 3 und das Arretierungselement 5 sind in den gezeigten Ausführungsbeispielen jeweils als zylinderförmiger Hohlkörper ausgestaltet, welcher von einer Zylindermantelfläche begrenzt ist. Der Halteabschnitt 3b ist an einer Innenfläche der Zylindermantelfläche der Haltevorrichtung 3 ausgebildet, sodass die Linsen 4 von dem zylinderförmigen Hohlkörper umfangseitig ummantelt sind.

Optional sind zwischen zumindest zwei benachbarten Linsen 4, bevorzugt zwischen allen aufeinanderfolgenden Linsen 4, Abstandselemente 9 angeordnet, welche zwei benachbarte Linsen 4 entlang der Hauptabstrahlrichtung x in einem vorgegebenen Abstand zueinander halten.

In dem Fall, dass mehrere Linsen 4 in der Haltevorrichtung 3 aufgenommen sind, kann der Kontaktbereich 8 (oder der Kontaktbereich 8'), gegen welche die proximale Linse 4 (oder die distale Linse 4) durch das Federelement 6 (oder das Federelement 6') gedrückt wird, als Abstandselement zwischen der distalen Linse 4 (oder der proximalen Linse) und der dieser Linse nachfolgenden Linse ausgestaltet sein.

Die **Fig. 5a bis 5d** zeigen verschiedene Varianten des Eingriffselements 6a und des Eingriffsgegenelements 6b. In Fig. 5a ist das Eingriffselement 6a (nicht gezeigt) und das Eingriffsgegenelement 6b eine Klebeverbindung 7a. In Fig. 5b ist das Eingriffselement 6a und das Eingriffsgegenelement 6b eine Rastverbindung 7b. In Fig. 5c bilden das Eingriffselement 6a und das Eingriffsgegenelement 6b einen Bajonettverschluss 7c. In Fig. 5d ist das Eingriffselement 6a (nicht gezeigt) und das Eingriffsgegenelement 6b als eine Klemmverbindung 7d ausgestaltet.

### LISTE DER BEZUGSZEICHEN

- 1: Linsensystem
- 2: Leuchtmittel
- 3: Haltevorrichtung
- 3a: Anfangsabschnitt
- 3b: Halteabschnitt
- 3c: Endabschnitt
- 4: Linse
- 4a: Lichteintrittsfläche
- 4b: Lichtaustrittsfläche
- 5: Arretierungselement
- 6: Federelement des Arretierungselements
- 6': Federelement der Haltevorrichtung
- 6a: Eingriffselement
- 6b: Eingriffsgegenelement
- 7a: Klebeverbindung
- 7b: Rastverbindung
- 7c: Bajonettverschluss
- 7d: Klemmverbindung
- 8: der Haltevorrichtung
- 8': Kontaktbereich des Arretierungselements
- 9: Abstandselement
- A: optische Achse der Linse
- L: Längsachse der Haltevorrichtung
- X: Hauptabstrahlrichtung des Leuchtmittels

## Patentansprüche

1. Linsensystem (1), welches dazu eingerichtet ist, mit einem Leuchtmittel (2) zusammenzuwirken, wobei in einem Assemblierungszustand, in welchem das Linsensystem (1) mit einem Leuchtmittel (2) zusammenwirkt, das Linsensystem (1) mit dem Leuchtmittel (2) eine Komponente einer Fahrzeugleuchte oder eine Fahrzeugleuchte, insbesondere eine Kraftfahrzeugleuchte, ausbildet, wobei im Assemblierungszustand das Linsensystem (1) dazu eingerichtet sind, Licht, welches von dem Leuchtmittel (2) erzeugbar und entlang einer Hauptabstrahlrichtung (x) abstrahlbar ist, optisch zu beeinflussen, wobei das Linsensystem
eine Haltevorrichtung (3) umfasst, welche im Assemblierungszustand in Hauptabstrahlrichtung (x) nach dem Leuchtmittel (2) angeordnet ist und in welcher zumindest eine Linse (4), vorzugsweise zwei, drei oder mehr Linsen, aufgenommen ist, wobei die zumindest eine Linse (4) dazu eingerichtet ist, in Zusammenwirken mit dem Leuchtmittel (2) eine Lichtfunktion auszubilden, wobei die Haltvorrichtung (3) einen Halteabschnitt (3b) aufweist, welcher dazu eingerichtet ist, die zumindest eine Linse (4) derart zu halten, dass
im Assemblierungszustand eine Lichteintrittsfläche (4a) der zumindest einen Linse (4) dem Leuchtmittel (2) zugewandt ist und eine Lichtaustrittsfläche (4b) der zumindest einen Linse (4) dem Leuchtmittel (2) abgewandt ist, sodass Licht des Leuchtmittels (2) über die Lichteintrittsfläche (4a) in die zumindest eine Linse eintreten, durch die zumindest eine Linse (4) durchtreten, und über die Lichtaustrittsfläche (4b) aus der zumindest einen Linse (4) austreten kann,
eine optische Achse (A) der zumindest einen Linse (4) parallel, bevorzugt koaxial, zur Hauptabstrahlrichtung (x) orientiert ist, und
die zumindest eine Linse (4) in einer Ebene, welche orthogonal auf die optische Achse (A) der zumindest einen Linse (4) orientiert ist, fixiert ist,
wobei die Haltevorrichtung (3) einen dem Leuchtmittel (2) zugewandten Anfangsabschnitt (3a) und einen dem Leuchtmittel (2) abgewandten Endabschnitt (3c) aufweist, wobei sich der Halteabschnitt (3b) von dem Anfangsabschnitt (3a) zu dem Endabschnitt (3c) entlang einer Längsachse (L) der Haltevorrichtung (3) erstreckt,
**dadurch gekennzeichnet, dass**
der Halteabschnitt (3b) einen Kontaktbereich (8) aufweist, welcher dazu eingerichtet ist, eine, insbesondere koaxiale lineare, Bewegung der zumindest einen Linse (4) entgegen der Hauptabstrahlrichtung (x) über den Anfangsabschnitt (3a) der Haltevorrichtung (3) hinaus zu blockieren,
wobei das Linsensystem (1) ein Arretierungselement (5) aufweist, welches an dem Endabschnitt (3c) der Haltevorrichtung (3) befestigbar ist, wobei das Arretierungselement (5) ein Eingriffselement (6a) und der Endabschnitt (3c) ein zu dem Eingriffselement (6a) komplementär ausgestaltetes Eingriffsgegenelement (6b) aufweist, wobei durch einen Eingriff des Eingriffselements (6a) mit dem Eingriffsgegenelement (6b) das Arretierungselement (5) an dem Endabschnitt (3c), vorzugsweise lösbar, befestigt ist, wobei das Arretierungselement (5) dazu eingerichtet ist, im befestigten Zustand des Arretierungselements (5) an dem Endabschnitt (3c) eine Bewegung der zumindest einen Linse (4) entlang der Hauptabstrahlrichtung (x) über den Endabschnitt (3c) der Haltevorrichtung (3) hinaus zu blockieren,
wobei das Arretierungselement (5) ein Federelement (6) aufweist, welches dazu eingerichtet ist, im befestigten Zustand des Arretierungselements (5) an dem Endabschnitt (3c) an der zumindest einen Linse (4), insbesondere an einem Abschnitt der Lichtaustrittsfläche (4b) der zumindest einen Linse (4), anzugreifen und eine Federkraft (F) auf die zumindest eine Linse (4) auszuüben, wobei das Federelement (6) derart ausgestaltet ist, dass die Federkraft (F) entgegensetzt zur Hauptabstrahlrichtung (x) derart wirkt, dass durch die Federkraft (F) eine dem Federelement (6) abgewandte Seite der zumindest einen Linse (4) gegen den Kontaktbereich (8) gedrückt und in einer Position entlang der Hauptabstrahlrichtung (x) fixiert wird,
**oder, dass**
das Linsensystem (1) ein Arretierungselement (5) aufweist, welches an dem Endabschnitt (3c) der Haltevorrichtung (3) befestigbar ist, wobei das Arretierungselement (5) ein Eingriffselement (6a) und der Endabschnitt (3c) ein zu dem Eingriffselement (6a) komplementär ausgestaltetes Eingriffsgegenelement (6b) aufweist, wobei durch einen Eingriff des Eingriffselements (6a) mit dem Eingriffsgegenelement (6b) das Arretierungselement (5) an dem Endabschnitt (3c), vorzugsweise lösbar, befestigt ist, wobei das Arretierungselement (5) einen Kontaktbereich (8') aufweist, welcher dazu eingerichtet ist, eine, insbesondere koaxiale lineare, Bewegung der zumindest einen Linse (4) entlang der Hauptabstrahlrichtung (x) über den Endabschnitt (3c) der Haltevorrichtung (3) hinaus zu blockieren,
wobei der Anfangsabschnitt (3a) der Haltevorrichtung ein Federelement (6') aufweist, welches dazu eingerichtet ist, im befestigten Zustand des Arretierungselements (5) an dem Endabschnitt (3c) an der zumindest einen Linse (4), insbesondere an einem Abschnitt der Lichteintrittsfläche (4a) der zumindest einen Linse (4), anzugreifen und eine Federkraft (F') auf die zumindest eine Linse (4) auszuüben, wobei das Federelement (6') derart ausgestaltet ist, dass die Federkraft (F') entlang zur Hauptabstrahlrichtung (x) derart wirkt, dass durch die Federkraft (F') eine dem Federelement (6) abgewandte Seite der zumindest einen Linse (4) gegen den Kontaktbereich (8') gedrückt und in einer Position entlang der Hauptabstrahlrichtung (x) fixiert wird.

2. Linsensystem (1) nach Anspruch 1, wobei das Federelement (6, 6') zumindest zwei, drei, vier oder mehr Federarme aufweist, welche sich im befestigten Zustand radial, hin zur Längsachse (L) der Haltevorrichtung (3) erstrecken, wobei die Federarme derart an dem Arretierungselement (5) oder dem Anfangsabschnitt (3a) angeordnet sind, dass, an der zumindest einen Linse (4) angreifende, Angriffsflächen der Federarme an der zumindest einen Linse (4) umfangseitig entlang eines Linsenumfangs der zumindest einen Linse (4) gleichmäßig bzw. äquidistant verteilt sind.

3. Linsensystem (1) nach einem der vorhergehenden Ansprüche, wobei die Haltevorrichtung (3) als Hohlkörper ausgestaltet ist, welcher eine Längserstreckung, welche parallel zur Längsachse (L) und parallel zur Lichtabstrahlrichtung (x) verläuft, aufweist, wobei an einer Innenseite einer den Hohlkörper begrenzenden Mantelfläche der Halteabschnitt (3b) ausgebildet ist.

4. Linsensystem (1) nach einem der vorhergehenden Ansprüche, wobei die Haltevorrichtung (3), und vorzugsweise das Arretierungselement (5), als zylinderförmiger Hohlkörper ausgestaltet ist, welcher von einer Zylindermantelfläche begrenzt ist, wobei der Halteabschnitt (3b) an einer Innenfläche der Zylindermantelfläche ausgebildet ist, sodass die zumindest eine Linse (4) von dem zylinderförmigen Hohlkörper umfangseitig ummantelt ist.

5. Linsensystem (1) nach Anspruch 4, wobei das Federelement (6, 6') zumindest zwei, drei, vier oder mehr Federarme aufweist, welche jeweils eine kreissegmentförmige Längserstreckung aufweisen, wobei die zumindest zwei Federarme derart ausgestaltet sind, dass deren Längserstreckung einem Abschnitt eines virtuellen Kreises folgt, dessen Radius gleich oder kleiner dem Umfang der Zylindermantelfläche ist.

6. Linsensystem (1) nach einem der vorhergehenden Ansprüche, umfassend zumindest zwei, drei oder mehr Linsen (4), welche an dem Halteabschnitt (3b) koaxial, entlang der Hauptabstrahlrichtung (x) hintereinander angeordnet sind, wobei vorzugsweise zwischen zumindest zwei benachbarten Linsen (4), bevorzugt zwischen allen aufeinanderfolgenden Linsen (4), Abstandselemente (9) angeordnet sind, welche zwei benachbarte Linsen entlang der Hauptabstrahlrichtung (x) in einem vorgegebenen Abstand zueinander halten.

7. Linsensystem (1) nach Anspruch 6, wobei eine proximale Linse dem Leuchtmittel (2) am nächsten ist und eine distale Linse dem Leuchtmittel (2) am entferntesten ist, wobei an der Lichtaustrittsfläche (4b) der distalen Linse das Federelement (6) angreift und die Lichteintrittsfläche (4a) der proximalen Linse den Kontaktbereich (8) des Halteabschnitts (3b) kontaktiert, oder an der Lichteintrittsfläche (4a) der proximalen Linse das Federelement (6') angreift und die Lichtaustrittsfläche (4b) der distalen Linse den Kontaktbereich (8') des Arretierungselements (5) kontaktiert.

8. Linsensystem (1) nach Anspruch 6 oder 7, wobei die zumindest zwei, drei oder mehr Linsen (4) jeweils gleiche oder unterschiedliche Linsenformen aufweisen, beispielsweise eine bi-konvexe, bi-konkave, konkav-konvex oder konvex-konkave Linsenform.

9. Linsensystem (1) nach einem der vorhergehenden Ansprüche, wobei die Haltevorrichtung (3) mit der zumindest einen Linse (4) als Objektivtubus ausgestaltet ist.

10. Linsensystem (1) nach einem der vorhergehenden Ansprüche, wobei das Eingriffselement (6a) und das Eingriffsgegenelement (6b) eine Klebeverbindung (7a), eine Rastverbindung (7b), einen Bajonettverschluss (7c) oder eine Klemmverbindung (7d) ausbilden.

11. Linsensystem (1) nach einem der vorhergehenden Ansprüche, wobei der Halteabschnitt (3b), vorzugsweise die Haltevorrichtung (3), für Licht des Leuchtmittels (2) intransparent ausgestaltet ist.

12. Linsensystem (1) nach einem der vorhergehenden Ansprüche, wobei der Kontaktbereich (8) der Haltevorrichtung (3) und/oder der Kontaktbereich (8') des Arretierungselements (5) als Kontaktfläche, beispielsweise als Vorsprung, ausgestaltet ist, welche sich von einer der zumindest einen Linse (4) zugewandten Innenfläche des Arretierungselements (5) oder der Haltevorrichtung (3) in Richtung Längsachse (L) erstreckt.

13. Fahrzeugleuchte, insbesondere Kraftfahrzeugleuchte, umfassend ein Linsensystem (1) nach einem der Ansprüche 1 bis 12 und ein Leuchtmittel (2), welches mit dem Linsensystem (1) zusammenwirkt und mit dem Linsensystem (1) einen Assemblierungszustand ausbildet, wobei die Fahrzeugleuchte insbesondere ein Kraftfahrzeugscheinwerfer, eine Bodenprojektionsvorrichtung oder ein Digital-Light-Processing-Lichtmodul ist.

14. Verfahren zur Assemblierung eines Linsensystems (1) für eine Fahrzeugleuchte, umfassend die folgenden Schritte:
- Bereitstellen eines Leuchtmittels (2) zur Erzeugung und Abstrahlung von Licht entlang einer Hauptabstrahlrichtung (x),
- Bereitstellen einer Haltevorrichtung (3), welche in Hauptabstrahlrichtung (x) nach dem Leuchtmittel (2) angeordnet ist,
- Aufnehmen von zumindest einer Linse (4), vorzugsweise zwei, drei oder mehr Linsen, in die Haltevorrichtung, wobei die zumindest eine Linse (4) im aufgenommenen Zustand dazu eingerichtet ist, in Zusammenwirken mit dem Leuchtmittel (2) eine Lichtfunktion auszubilden, wobei die Haltvorrichtung (3) einen Halteabschnitt (3b) aufweist, welcher dazu eingerichtet ist, die zumindest eine Linse (4) derart zu halten, dass
eine Lichteintrittsfläche (4a) der zumindest einen Linse (4) dem Leuchtmittel (2) zugewandt ist und eine Lichtaustrittsfläche (4b) der zumindest einen Linse (4) dem Leuchtmittel (2) abgewandt ist, sodass Licht des Leuchtmittels (2) über die Lichteintrittsfläche (4a) in die zumindest eine Linse eintreten, durch die zumindest eine Linse (4) durchtreten, und über die Lichtaustrittsfläche (4b) aus der zumindest einen Linse (4) austreten kann,
eine optische Achse (A) der zumindest einen Linse (4) parallel, bevorzugt koaxial, zur Hauptabstrahlrichtung (x) orientiert ist, und
die zumindest eine Linse in einer Ebene, welche orthogonal auf die optische Achse (A) der zumindest einen Linse (4) orientiert ist, fixiert ist,
wobei die Haltevorrichtung (3) einen dem Leuchtmittel (2) zugewandten Anfangsabschnitt (3a) und einen dem Leuchtmittel (2) abgewandten Endabschnitt (3c) aufweist, wobei sich der Halteabschnitt (3b) von dem Anfangsabschnitt (3a) zu dem Endabschnitt (3c) entlang einer Längsachse (L) der Haltevorrichtung (3) erstreckt,
**gekennzeichnet durch** die Schritte:
- Bereitstellen eines Arretierungselements (5), welches an dem Endabschnitt (3c) der Haltevorrichtung (3) befestigbar ist, wobei das Arretierungselement (5) ein Eingriffselement (6a) und der Endabschnitt (3c) ein zu dem Eingriffselement (6a) komplementär ausgestaltetes Eingriffsgegenelement (6b) aufweist, wobei durch einen Eingriff des Eingriffselements (6a) mit dem Eingriffsgegenelement (6b) das Arretierungselement (5) an dem Endabschnitt (3c), vorzugsweise lösbar, befestigt ist, wobei das Arretierungselement (5) dazu eingerichtet ist, im befestigten Zustand eine Bewegung der zumindest einen Linse (4) entlang der Hauptabstrahlrichtung (x) über den Endabschnitt (3c) hinaus zu blockieren,
wobei der Halteabschnitt (3b) einen Kontaktbereich (8) aufweist, welcher dazu eingerichtet ist, eine, insbesondere koaxiale lineare, Bewegung der zumindest einen Linse (4) entgegen der Hauptabstrahlrichtung (x) über den Anfangsabschnitt (3a) zu blockieren,
- Befestigen des Arretierungselements (5) an dem Endabschnitt (3c), wobei das Arretierungselement (5) ein Federelement (6) aufweist, welches dazu eingerichtet ist, im befestigten Zustand des Arretierungselements (5), an der zumindest einen Linse (4), insbesondere an einem Abschnitt der Lichtaustrittsfläche (4b) der zumindest einen Linse (4), anzugreifen und eine Federkraft (F) auf die zumindest eine Linse (4) auszuüben, wobei das Federelement (6) derart ausgestaltet ist, dass die Federkraft (F) entgegensetzt zur Hauptabstrahlrichtung (x) wirkt und durch die Federkraft (F) eine dem Federelement (6) abgewandte Seite der zumindest einen Linse (4) gegen den Kontaktbereich (8) gedrückt und in einer Position entlang der Hauptabstrahlrichtung (x) fixiert wird,
**oder, gekennzeichnet durch** die Schritte:
- Bereitstellen eines Arretierungselements (5), welches an dem Endabschnitt (3c) der Haltevorrichtung (3) befestigbar ist, wobei das Arretierungselement (5) ein Eingriffselement (6a) und der Endabschnitt (3c) ein zu dem Eingriffselement (6a) komplementär ausgestaltetes Eingriffsgegenelement (6b) aufweist, wobei durch einen Eingriff des Eingriffselements (6a) mit dem Eingriffsgegenelement (6b) das Arretierungselement (5) an dem Endabschnitt (3c), vorzugsweise lösbar, befestigt ist,
wobei das Arretierungselement (5) einen Kontaktbereich (8') aufweist, welcher dazu eingerichtet ist, eine, insbesondere koaxiale lineare, Bewegung der zumindest einen Linse (4) entlang der Hauptabstrahlrichtung (x) über den Endabschnitt (3c) hinaus zu blockieren,
- Befestigen des Arretierungselements (5) an dem Endabschnitt (3c), wobei der Anfangsabschnitt (3a) ein Federelement (6') aufweist, welches dazu eingerichtet ist, im befestigten Zustand des Arretierungselements (5) an dem Endabschnitt (3c) an der zumindest einen Linse (4), insbesondere an einem Abschnitt der Lichteintrittsfläche (4a) der zumindest einen Linse (4), anzugreifen und eine Federkraft (F') auf die zumindest eine Linse (4) auszuüben, wobei das Federelement (6') derart ausgestaltet ist, dass die Federkraft (F') entlang der Hauptabstrahlrichtung (x) derart wirkt, dass durch die Federkraft (F') eine dem Federelement (6') abgewandte Seite der zumindest einen Linse (4) gegen den Kontaktbereich (8') gedrückt und in einer Position entlang der Hauptabstrahlrichtung (x) fixiert wird.
